(19) **Europäisches Patentamt**
**European Patent Office**
**Office européen des brevets**

(11) **EP 3 079 099 B1**

(12) **EUROPEAN PATENT SPECIFICATION**

(45) Date of publication and mention
of the grant of the patent:
**11.03.2020 Bulletin 2020/11**

(51) Int Cl.:
***G06K 9/00*** *(2006.01)*

(21) Application number: **16159912.1**

(22) Date of filing: **11.03.2016**

(54) **METHOD AND DEVICE FOR DETECTING ROAD DIVIDING OBJECT**

VERFAHREN UND VORRICHTUNG ZUR ERKENNUNG EINES STRASSENTEILUNGSOBJEKTS

PROCÉDÉ ET DISPOSITIF DE DÉTECTION D'OBJET DE DIVISION DE LA ROUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2015 CN 201510151714**

(43) Date of publication of application:
**12.10.2016 Bulletin 2016/41**

(73) Proprietor: **Ricoh Company, Ltd.**
**Tokyo 143-8555 (JP)**

(72) Inventors:
• **LI, Jingwen**
**Haidian District**
**Beijing 100044 (CN)**
• **SHI, Zhongchao**
**Haidian District**
**Beijing 100044 (CN)**
• **LU, Yaojie**
**Haidian District**
**Beijing 100044 (CN)**
• **HE, Na**
**Haidian District**
**Beijing 100044 (CN)**

• **LIU, Dianchao**
**Haidian District**
**Beijing 100044 (CN)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
**EP-A1- 2 811 423        EP-A2- 0 434 455
US-A1- 2012 213 412      US-A1- 2014 003 709**

• **R. Nock ET AL: "Statistical region merging", IEEE
Transactions on Pattern Analysis and Machine
Intelligence, vol. 26, no. 11, 1 November 2004
(2004-11-01), pages 1452-1458, XP055554037,
USA ISSN: 0162-8828, DOI:
10.1109/TPAMI.2004.110**
• **STEPHEN GOULD ET AL: "Region-based
Segmentation and Object Detection",
ADVANCES IN NEURAL INFORMATION
PROCESSING SYSTEMS 22, 12 July 2009
(2009-07-12), XP055553941,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 079 099 B1

**Description**

BACKGROUND OF THE INVENTION

1. Field of the Invention

The present invention relates to object detection, more particularly relates to a method and device for detecting at least one object for dividing a road (hereinafter, also called a "road dividing object") such as a road dividing line.

2. Description of the Related Art

A driving assistance system has been widely used up to now. A lane/road detection warning (LDW/RDW) system is a sub system of the driving assistance system. By using the LDW/RDW system, for example, it is possible to avoid a car crash, and to more accurately determine a driving direction. A lane/road detection process is very important to the LDW/RDW system. As long as the road information is known, it is possible to carry out a further process, for example, communicating a warning message. In general, the lane/road detection process is conducted by detecting a road dividing object.

The road dividing object includes a road dividing line, a road shoulder made of stone, a fence, or any other object by which it is possible to mark the region of a road and the parts of the road to be used by a vehicle. The road dividing line also includes a white or yellow line.

In one of the conventional methods, when detecting a road dividing object, first plural feature points on the road dividing object in an image are extracted, and then a road dividing object model is created on the basis of the plural feature points so as to determine the exact location of the road dividing object. However, since there exists an error in the detection process of the plural feature points of the road dividing object, this kind of method puts emphasis on generating a complicated road dividing object model and post-processing so that it is possible to acquire a more accurate location of the road dividing object. This is a kind of very troublesome work, and cannot be well applied to a driving assistance system which needs an extremely high realness.

US 2014/003709 discloses a system and method for detecting road marking in a video using learned road marking templates.

SUMMARY OF THE INVENTION

The invention proposes a method for detecting at least one road dividing object as defined by claim 1, a corresponding device according to claim 6 and a corresponding non-transitory computer-readable medium according to claim 7.

The objective of the present invention is to provide a method and device by which it is possible to reduce the complexity of calculation and to improve the accuracy of road dividing object detection.

As a result, by utilizing the method and device, it is possible to detect one or more road dividing object regions in an image, the distribution of the road dividing object regions being able to reflect the basic conditions of one or more road dividing objects, and to determine the road dividing objects on the basis of the feature points of the road dividing objects in the road dividing object regions. Since the related road dividing object modelling process is conducted according to the road dividing object regions (i.e., a kind of middle-layer expression) but not pixels (i.e., a kind of pure bottom-layer expression), it is possible to reduce the complexity of both the related road dividing object modelling process and the related post-processing algorithm, and to improve the accuracy of the road dividing object detection process.

BRIEF DESCRIPTION OF THE DRAWINGS

FIG. 1 illustrates a driving assistance system serving as an example of an application environment of the present invention;
FIG. 2 is a flowchart of a road dividing object detection method according to a first embodiment of the present invention;
FIG. 3 is a flowchart of a process of detecting plural road dividing object regions;
FIG. 4 illustrates plural noticeable sub regions;
FIG. 5 illustrates plural road dividing object sub regions selected from the plural noticeable sub regions shown in FIG. 4;
FIG. 6 illustrates plural road dividing object regions generated based on the plural road dividing object sub regions shown in FIG. 5;
FIG. 7 illustrates a feature point detection result of plural road dividing objects;
FIG. 8 illustrates a road dividing object detection result in plural road dividing object regions, obtained according to the plural feature points of the plural road dividing objects shown in FIG. 7;
FIG. 9 illustrates a final road dividing object fitting result acquired on the basis of the road dividing object detection result shown in FIG. 8;
FIG. 10 is a block diagram of a road dividing object detection device according to a second embodiment of the present invention; and
FIG. 11 is a block diagram of a detection system able to realize road dividing object detection, according to a third embodiment of the present invention.

DETAILED DESCRIPTION OF THE PREFERRED EMBODIMENTS

In order to let those people skilled in the art better understand the present invention, hereinafter, the embodiments of the present invention will be concretely described with reference to the drawings. However it should be noted that the same symbols, which are in the specification and the drawings, stand for constructional elements having basically the same function and structure, and repeated explanations for the constructional elements are omitted.

Here it should be noted that the detailed description of the embodiments of the present invention will be carried out according to the following order.

 1. Outline of Thought of Invention
 2. Embodiments

  2.1 Process of Detecting Road Dividing Objects
  2.2 Detection of Road Dividing Object Regions
  2.3 Detection of Feature Points of Road Dividing Objects
  2.4 Road Dividing Object Detection Device
  2.5 Road Dividing Object Detection System

 3. Conclusion

<1. Outline of Thought of Invention>

Before carrying out the detailed description of the embodiments, the thought of the present invention is introduced so as to let those people skilled in the art better understand the present invention.

As describe above, in one of the conventional methods, first plural feature points on a road dividing object in an image are extracted, and then a road dividing object model is created on the basis of the plural feature points so as to determine the exact location of the road dividing object. As a result, the related modelling algorithm based on the plural feature points is very complicated, and may take a lot of time.

However, by utilizing the method and device according to the embodiments of the present invention, it is possible to detect a rough region of each road dividing object (hereinafter, also called a "road dividing object region"), the distribution of the road dividing object regions being able to reflect the basic conditions of the road dividing objects. In this way, the follow-on road dividing object modelling algorithm may be based on the road dividing object regions (i.e., a kind of middle-layer expression) but not pixels (i.e., a kind of pure bottom-layer expression). Consequently, it is possible to reduce the complexity of both the related road dividing object modelling process and the related post-processing algorithm, and to improve the accuracy of the road dividing object detection process.

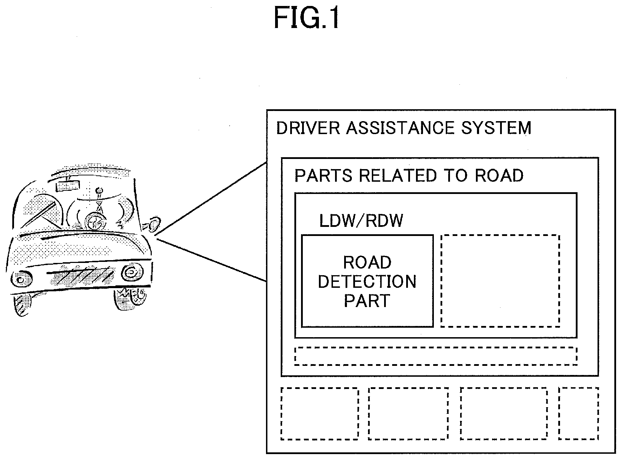

FIG. 1 illustrates a driving assistance system serving as an example of an application environment of the present invention.

Here the software or hardware based achievement according to the embodiments of the present invention may serve as the road detection part in the driving assistance system shown in FIG. 1.

<2. Embodiments>

<2.1 Process of Detecting Road Dividing Objects>

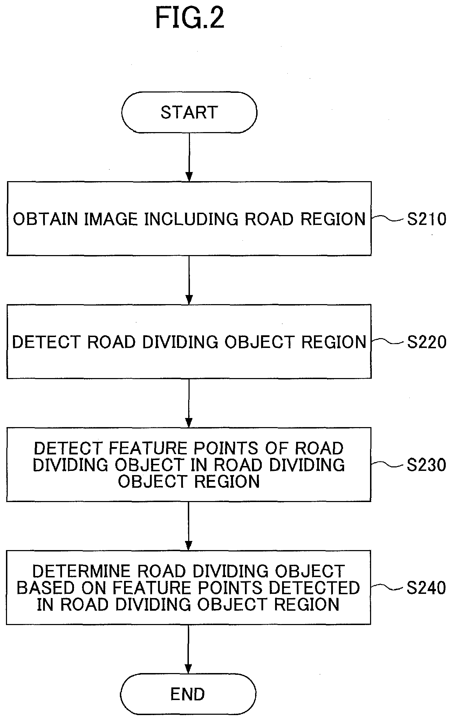

FIG. 2 is a flowchart of a road dividing object detection method according to a first embodiment of the present invention.

As shown in FIG. 2, the method may include STEPS S210 to S240.

In STEP S210 of FIG. 2, an image including a road region is obtained. It is possible to utilize a camera to photograph a target scene including the road region in real time so as to acquire the image including the road region. Also it is possible to obtain the image via a network. Alternatively, the image may be a frame among video shots by a camera. Here the image may include but is not limited to a color image, a grayscale image, a depth image, etc.

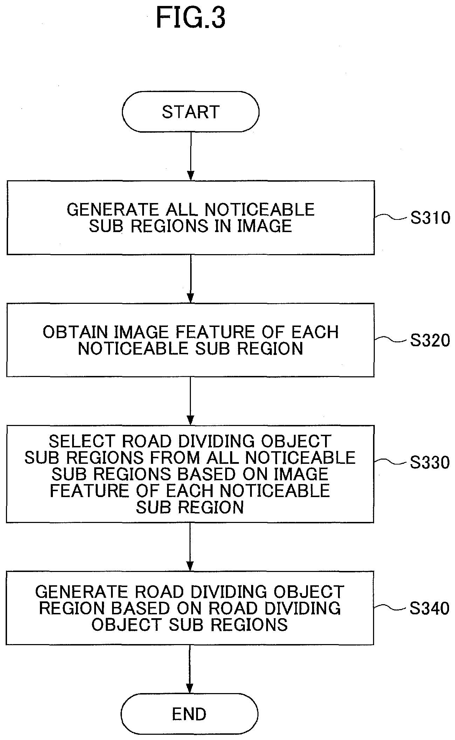

After obtaining the image including the road region, in STEP S220 of FIG. 2, it is possible to detect one or more road dividing object regions (hereinafter, plural road dividing object regions are used just for illustration) in the road region of the image. The plural road dividing object regions are ones including at least one road dividing object (hereinafter, plural road dividing objects are used just for illustrations) in the image. The distribution of the plural road dividing object regions may reflect the basic conditions of the plural road dividing objects. An example of a process of detecting the plural road dividing object regions will be depicted below by referring to FIGS. 3 to 6.

In STEP S230 of FIG. 1, plural feature points related to the plural road dividing objects in the plural road dividing object regions detected from the road region of the image are detected. For example, it is possible to detect, on the grounds of features such as a color feature (e.g., white or yellow road dividing lines) and an edge feature (e.g., continuous straight lines) of the plural road dividing objects, the plural feature points related to the plural road dividing objects. An example of a process of detecting the plural feature points will be described below.

After that, in STEP S240 of FIG. 2, the plural road dividing objects are determined according to the plural feature points of the plural road dividing objects in the plural road dividing object regions detected from the road region in the image. For example, it is possible to create, based on the plural feature points in each road dividing object region, a road dividing object model for this road dividing object region, so that it is possible to acquire plural road dividing object segments in each road dividing object region, and to fit, based on the plural road dividing object segments in each road dividing object region, the road dividing object in this road dividing object region.

<2.2 Detection of Road Dividing Object Regions>

In what follows, an example of a process of detecting plural road dividing object regions (in STEP S220 of FIG. 2) will be given by referring to FIGS. 3 to 6.

FIG. 3 is a flowchart of the process of detecting the plural road dividing object regions.

As shown in FIG. 3, the process may include STEPS S310 to S340. In STEP S310, noticeable sub regions of the image are generated. In STEP S320, the image feature of each noticeable sub region is obtained. In STEP S330, based on the image feature of each noticeable sub region, plural sub regions including plural road dividing objects (hereinafter, also called "road dividing object sub regions") are selected from the noticeable sub regions. And then, in STEP S340, the plural road dividing object regions are generated on the basis of the selected plural sub regions.

In STEP S310 of FIG. 3, the noticeable sub regions of the image are generated. Here a noticeable sub region refers to one having conspicuousness, such as a vehicle, a building, a pedestrian, or a road dividing object in the image. In addition, it is possible to generate the noticeable sub regions by adopting any proper conventional approach such as a disparity based clustering one.

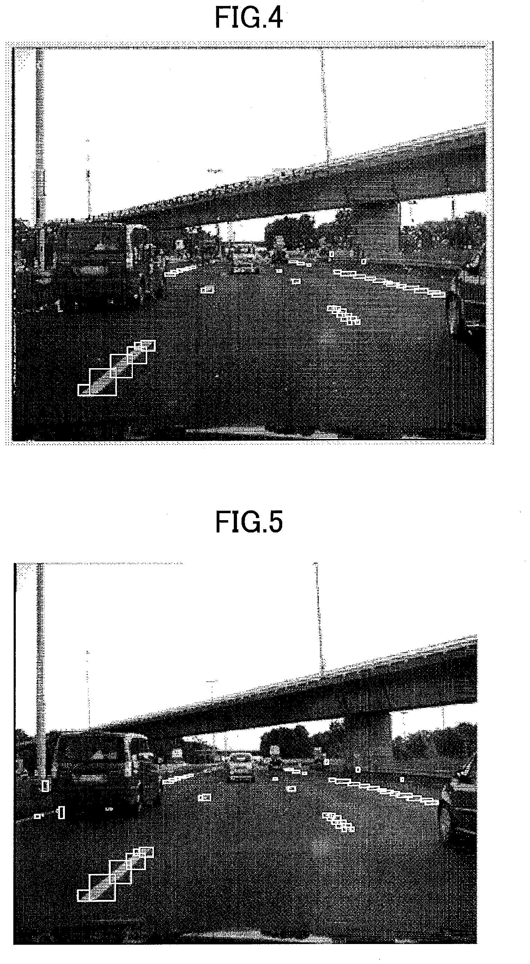

FIG. 4 illustrates the generated noticeable sub regions.

Here although each noticeable sub region in FIG. 4 is shown by a rectangle, the present invention is not limited to this; that is, any other proper shape may be adopted for representing the corresponding noticeable sub region.

After obtaining the noticeable sub regions of the image, in STEP S320 of FIG. 3, the image feature of each noticeable sub region is acquired. The image feature may include but is not limited to a grayscale feature, a gradient feature, a disparity feature, etc. In general, it is possible to obtain a combination of a few image features of the noticeable sub regions. Of course, there is no restriction on the number of image features in this case; that is, it is also possible to adopt only one image feature. In addition, what kinds of image features may be adopted is dependent on the condition of the image and the related application scene.

For example, the acquired image features may be expressed as $F=\{f_i\}$ (i=1, 2, ..., K). Here, K stands for the types of the acquired image features, and $f_i$ refers to the feature value of each type of the acquired image features.

After acquiring the image feature of each noticeable sub region, in STEP S330 of FIG. 3, it is possible to select, based on the image feature of each noticeable sub region, plural sub regions including plural road dividing objects from the noticeable sub regions. For example, it is possible to utilize a pre-trained (i.e., predetermined) sub region classifier to determine, based on the image feature of each noticeable sub region, whether this noticeable sub region is a sub region including a road dividing object.

For instance, a classifier may be expressed by the following equation (1).

$$S_n = \sum_{i=1}^{K} \omega_i f_i \quad (1)$$

Here, $S_n$ denotes a classifier based result with respect to a noticeable sub region n; and as described above, K stands for the type of the image feature acquired with respect to the noticeable sub region n, and $f_i$ refers to the feature value of each type of the image features acquired. In addition, $\omega_i$ stands for the weight of each feature value $f_i$, and may be obtained by carrying out training.

For example, it is possible to utilize a pre-acquired positive and negative sample set for training to carry out training so as to obtain a best weight $\widehat{\omega}$. In a case where a road dividing line is taken as an example of the road dividing object, a positive sample is an image of a sub region including the road dividing line (hereinafter, also called a "road dividing line sub region (RDLSR)"), and a negative sample is an image of a sub region not including the road dividing line (hereinafter, also called a "non-road diving line sub region (non-RDLSR)"). This kind of sample set for training may be obtained by specifying a sub region in each existing image by a user, i.e., by specifying the sub region as a road dividing line sub region or a non-road dividing line sub region. Alternatively, it is possible to pre-obtain a sub region classification result by adopting any proper approach so as to serve as the sample set for training.

After that, the image feature of each sample including a positive or negative sample (i.e., a road dividing line sub region or a non-road dividing line sub region) is extracted which may be any one or any combination of a grayscale feature, a gradient feature, a disparity feature, etc., and may be expressed as $F=\{f_i\}$ (i=1, 2, ..., K), as described above. Then, according to the equation (1), it is possible to calculate $S_n$ with respect to each sample.

And then, it is possible to obtain the best weight $\widehat{\omega}$ on the basis of the following equation (2).

$$\widehat{\omega} = \min \frac{1}{N} \sqrt{\sum_{n=1}^{N} (S_n - C_n)^2} \quad (2)$$

Here, N is the number of sub regions in the sample set for training, and $C_n$ is a training label for each sub region. As a simplest case, regarding a positive sample, the value of $C_n$ may be taken as 1, and regarding a negative sample, the value of $C_n$ may be taken as -1. Of course, this is just an example; that is, the value of $C_n$ may be taken as needed.

In this way, it is possible to obtain the classifier expressed by the equation (1).

Hence it is possible to use the obtained classifier to conduct classification with respect to the noticeable sub regions acquired in STEP S310 of FIG. 3. For example, the classification process may be carried out by utilizing the following equation (3).

$$classification = \begin{cases} RDLSR & S_n > 0 \\ non-RDLSR & S_n \leq 0 \end{cases} \quad (3)$$

In other words, regarding each noticeable sub region, its relevant classifier based result $S_n$ is calculated according to the equation (1) on the basis of the image feature F of this noticeable sub region obtained in STEP S320 of FIG. 3. If Sn>0, then the corresponding noticeable sub region is considered as a road dividing line sub region (RDLSR); otherwise, it is considered as a non-road dividing line sub region (non-RDLSR).

Thus, in STEP S330 of FIG. 3, it is possible to select the plural road dividing object sub regions from the noticeable sub regions on the grounds of the image features of the respective noticeable sub regions.

FIG. 5 illustrates the plural road dividing object sub regions selected from the plural noticeable sub regions shown in FIG. 4.

As shown in FIG. 5, each road dividing object sub region is represented by a white rectangle. However, the present invention is not limited to this. That is, it is also possible to adopt any other proper shape to indicate each road dividing object sub region.

Here it should be noted that the classifier adopted above is just an example for illustration. That is, the present invention may utilize any other proper classifier such as a KNN (K-Nearest Neighbor) based one, a SVM (Support Vector Machine) based one, an AdaBoost based one, a neural network based one, or a Bayesian network based one.

After selecting the plural road dividing object sub regions from the noticeable sub regions, in STEP S340 of FIG. 3, it is possible to generate the plural road dividing object regions on the basis of the selected plural road dividing object sub regions. This may be achieved by carrying out a clustering process, for example.

In particular, in a case where a road dividing line is taken as an example of the road dividing object, since the image features of plural sub regions belonging to a same road dividing line region should be very similar, and the image features of plural sub regions belonging to different road dividing line regions should be usually very different, it is possible to conduct clustering on the basis of the image features of the selected respective road dividing line sub regions, so as to let the image features of the road dividing line sub regions clustered into a same road dividing line region have a minimum within-class variance and a maximum between-class variance.

The within-class variance and the between-class variance may be calculated by using the following equations (4) to (7).

$$\bar{f}_i = \frac{1}{n_i} \sum_{f \in classi} f \quad (4)$$

$$\bar{f} = \frac{1}{N} \sum_{n=1}^{N} f_n \quad (5)$$

$$S_{between} = \sum_{i=1}^{C} n_i (\bar{f}_i - \bar{f})(\bar{f}_i - \bar{f})^T \quad (6)$$

$$S_{within} = \sum_{i=1}^{C} \sum_{f \in classi} (\bar{f}_i - \bar{f})(\bar{f}_i - \bar{f})^T \quad (7)$$

Here, $\bar{f}_i$ refers to the mean value of the image features of the road dividing line sub regions clustered into an i-th road dividing line region; $n_i$ stands for the number of the road dividing line sub regions clustered into the i-th road dividing line region; N denotes the number of the road dividing line sub regions needing to be clustered; $\bar{f}$ represents the mean value of the image features of the road dividing line sub regions needing to be clustered; $S_{within}$ refers to the within-class variance; $S_{between}$ stands for the between-class variance; and C is the road dividing line sub region clustering result.

As described above, an optimum clustering result should be one able to let the within-class variance $S_{within}$ and the between-class variance $S_{between}$ of the image features of the road dividing line sub regions clustered into a same road dividing line region have a minimum value and a maximum value, respectively. That is, the following equation (8) should be satisfied.

$$\hat{C} = \min \frac{S_{within}}{S_{between}} \quad (8)$$

Actually, in order to remove noise, etc., it is possible to limit the values of $\hat{C}$, $S_{within}$, and $S_{between}$ to a certain range, respectively. That is, the values of $\hat{C}$, $S_{within}$, and $S_{between}$ should be less than a predetermined threshold, respectively. Here these kinds of thresholds may be predetermined by those people skilled in the art as needed.

Consequently, in STEP S340 of FIG. 3, it is possible to obtain an optimum clustering result $\hat{C}$ for each road dividing object sub region so as to generate a corresponding road dividing object region.

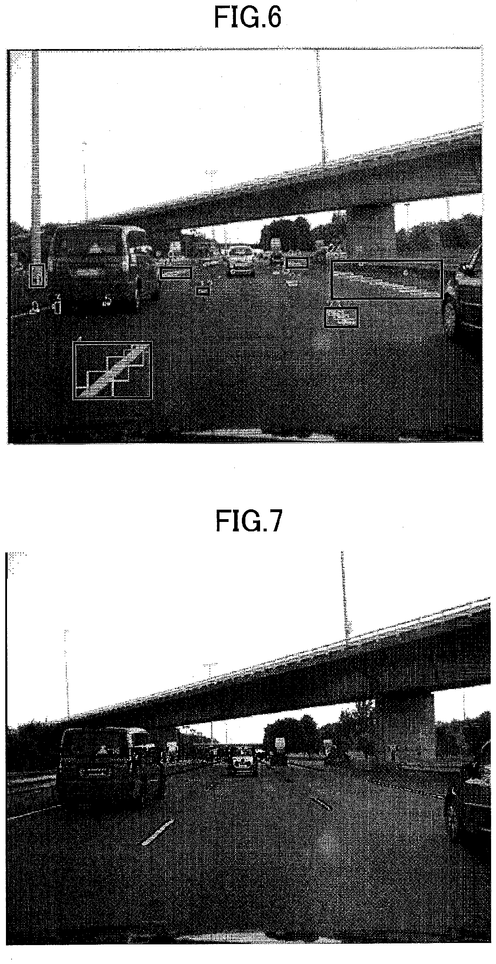

FIG. 6 illustrates the plural road dividing object regions generated based on the plural road dividing object sub regions shown in FIG. 5.

As shown in FIG. 6, each road dividing object region is represented by a black rectangle. However, the present invention is not limited to this. That is, it is also possible to adopt any other proper shape to indicate each road dividing object region.

As a result, by utilizing the road dividing object region detection process shown in FIG. 3, it is possible to detect plural road dividing object regions in the road region of the image, which may reflect the basic conditions of the plural road dividing objects therein, so as to provide a foundation for the follow-on road dividing object detection process. In this way, it is possible to reduce the complexity of the related road dividing object modelling process and to improve the accuracy of the road dividing object detection process.

<2.3 Detection of Feature Points of Road Dividing Objects>

In what follows, an example of a process of detecting plural feature points of plural road dividing objects (in STEP S230 of FIG. 2) will be given.

For example, first it is possible to detect feature points in the image obtained in STEP S210 of FIG. 2. Here a feature point refers to a key point able to reflect the feature of the image, and may be an extreme point, a start or end point of a line segment, a point whose curvature is maximum, a point whose attribute value along a horizontal or vertical direction is maximum, etc., in the image. In addition, it is possible to adopt any well-used feature point detection approach such as a SIFT (Scale-Invariant Feature Transform) feature based one, a SURF (Speeded Up Robust Feature) based one, or a Harris corner based one so as to carry out the feature point detection process.

And then, after acquiring the feature points in the image, it is possible to extract, on the basis of the image features of the plural road dividing objects, the plural feature points related to the plural road dividing objects from the feature points. Here, dependent on a specific road dividing object, its image feature may include a color feature (e.g., a white or yellow road dividing line), an edge feature (e.g., a continuous straight line), etc. Of course, the present invention is not limited to this. That is, it is also possible to adopt any other proper image feature for selecting the plural feature points of the plural road dividing objects from the feature points.

FIG. 7 illustrates a feature point detection result of the plural road dividing objects.

After detecting the feature points of the road dividing objects in the image, it is possible to obtain the plural feature points in the plural road dividing object regions detected in STEP S220 of FIG. 2, so that in STEP S240 of FIG. 2, it is possible to determine the plural road dividing objects on the basis of the obtained plural feature points in the plural road dividing object regions.

In other words, in an example, it is possible to first conduct STEP S230 of FIG. 2 so as to detect the feature points of the road dividing objects in the image, and then, conduct STEP S240 so as to detect the plural road dividing object regions, so that it is possible to extract the plural feature points of the plural road dividing objects in the detected plural road dividing object regions.

However, in another example, it is possible to first carry out STEP S220 so as to detect the plural road dividing object regions, and then, carry out STEP S230 so as to detect the feature points of the image only in the detected plural road dividing object regions and extract the plural feature points of the plural road dividing objects from the features points of the image.

Alternatively, the process of detecting the plural road dividing object regions in the image and the process of detecting the feature points of the plural road dividing objects in the image may be simultaneously performed. After obtaining the detection results of the two processes, it is possible to extract the plural feature points of the plural road dividing objects in the plural road dividing object regions.

In other words, the present invention does not restrict the order of the road dividing object region detection process and the road dividing object feature point detection process. As long as it is possible to finally obtain the plural feature points of the plural road dividing objects in the plural road dividing object regions, it is okay.

Accordingly, after acquiring the plural feature points of the plural road dividing objects in the plural road dividing object regions, it is possible to detect the plural road dividing objects on the basis of these feature points.

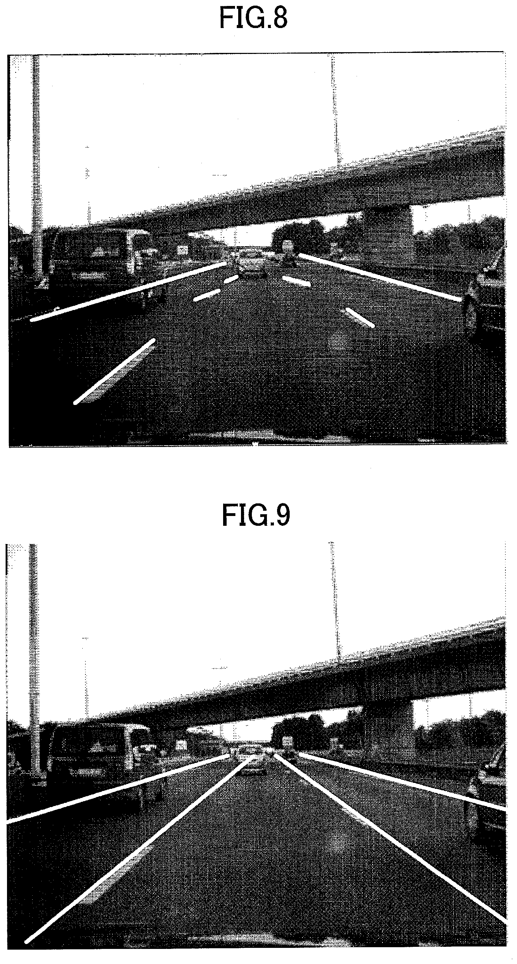

FIG. 8 illustrates a road dividing object detection result in the plural road dividing object regions, obtained according to the plural feature points of the plural road dividing objects shown in FIG. 7.

FIG. 9 illustrates a final road dividing object fitting result acquired on the basis of the road dividing object detection result shown in FIG. 8.

Here it is possible to utilize any proper road dividing object modelling approach such as a Hough transform based one, a RANSAC (RANdom SAmple Consensus) based one, a Snake model based one, etc., to create a road dividing object model. Since these kinds of modelling approaches are well known to those people skilled in the art, the detailed descriptions about them are omitted.

As a result, by utilizing the road dividing object detection method shown in FIG. 2 according to the first embodiment, it is possible to detect plural road dividing object regions in an image, the distribution of these regions being able to reflect the basis conditions of plural road dividing objects in the image. And then, on the basis of the detected plural feature points of the plural road dividing objects in the plural road dividing object regions, it is possible to determine the plural road dividing objects in the image. Since the related road dividing object modelling process is conducted on the basis of the road dividing object regions (i.e., a kind of middle-layer expression) but not pixels (i.e., a kind of pure bottom-layer expression), it is possible to reduce the complexity of both the related road dividing object modelling process and the related post-processing algorithm, and to improve the accuracy of the road dividing object detection process. As a result, this kind of road dividing object detection method is very suitable for a driving assistant system which needs an extremely high realness.

<2.4 Road Dividing Object Detection Device>

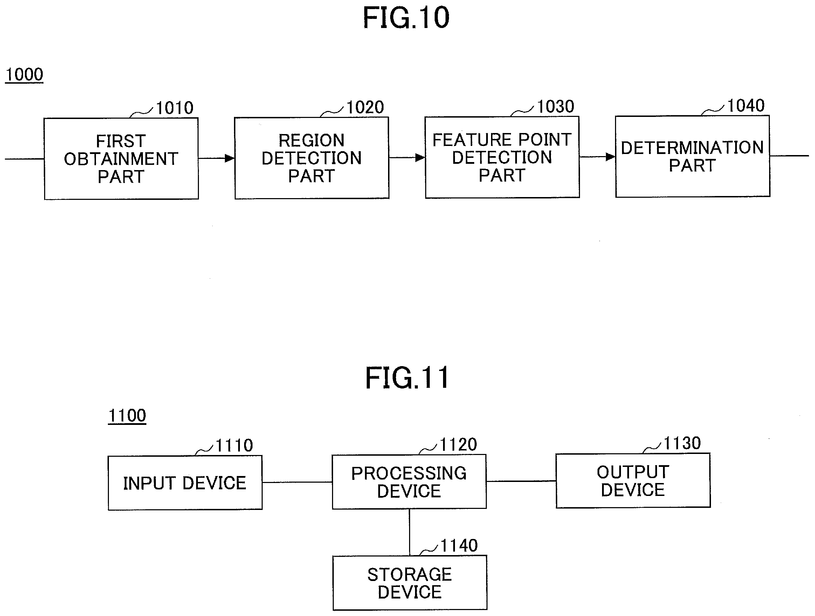

In what follows, a road dividing object detection device according to a second embodiment of the present invention will be given by referring to FIG. 10.

FIG. 10 is a block diagram of a road dividing object detection device 1000 according to the second embodiment of the present invention.

As shown in FIG. 10, the road dividing object detection device 1000 may include a first obtainment part 1010, a region detection part 1020, a feature point detection part 1030, and a determination part 1040.

The first obtainment part 1010 is configured to obtain an image including a road region. The region detection part 1020 is configured to detect plural road dividing object regions in the road region of the image. The feature point detection part 1030 is configured to detect plural feature points of plural road dividing objects in the plural road dividing object regions detected from the road region in the image. The determination part 1040 is configured to determine the plural road dividing objects on the basis of the plural feature points of the plural road dividing objects. Here, for details about the processes of the respective parts, it is also possible to see STEPS S210 to S240 in FIG. 2.

The feature point part 1030 may detect feature points in the image; then select, on the basis of the image features of the plural road dividing objects, the feature points of the plural road dividing objects from the feature points detected from the image; and then obtain, on the basis of the detection result of the region detection part 1020, the plural feature points of the plural road dividing objects in the plural road dividing object regions.

Alternatively, the feature point detection part 1030 may conduct, on the basis of the detection result of the region detection part 1020, detection only in the plural road dividing object regions so as to obtain feature points of the image in the plural road dividing object regions; and then, on the basis of the image features of the plural road dividing objects, extract the plural feature points of the plural road dividing objects from the detected feature points.

Optionally, the region detection part 1020 may include a first generation part configured to generate noticeable sub regions in the image; a second obtainment part configured to obtain the image feature of each noticeable sub region; a sub region selection part configured to select, on the basis of the image features of the respective noticeable sub regions, plural sub regions including the plural road dividing objects from the noticeable sub regions; and a second generation part configured to generate the plural road dividing object regions on the basis of the selected plural sub regions including the plural road dividing objects.

The sub region selection part may utilize a pretrained (i.e., predetermined) sub region classifier to determine, on the basis of the image feature of each noticeable sub region, whether this noticeable sub region belongs to a road dividing object sub region.

The second generation part may conduct clustering on the grounds of the image features of the respective road dividing object sub regions, so as to let the image features of the road dividing object sub regions clustered into a same road dividing object region have a minimum within-class variance and a maximum between-class variance.

The determination part 1040 may utilize the plural feature points of the plural road dividing objects to conduct a road dividing object model fitting process so as to determine the plural road dividing objects in the image.

Here, regarding the detailed processes of the first obtain part 1010, the region detection part 1020, the feature point detection part 1030, and the determination part 1040 of the road dividing object detection device 1000, since it is possible to refer to STEPS S220 to S240 of FIG. 2, their descriptions are omitted.

As a result, by utilizing the road dividing object detection device 1000 shown in FIG. 10 according to the second embodiment, it is possible to detect plural road dividing object regions in an image, the distribution of these regions being able to reflect the basis conditions of plural road dividing objects in the image. And then, on the basis of the detected plural feature points of the plural road dividing objects in the plural road dividing object regions, it is possible to determine the plural road dividing objects in the image. Since the related road dividing object modelling process is conducted on the basis of the road dividing object regions (i.e., a kind of middle-layer expression) but not pixels (i.e., a kind of pure bottom-layer expression), it is possible to reduce the complexity of both the related road dividing object modelling process and the related post-processing algorithm, and to improve the accuracy of the road dividing object detection process. As a result, this kind of road dividing object detection device is very suitable for a driving assistant system which needs an extremely high realness.

<3. Conclusion>

According to the embodiments of the present invention, a road dividing object detection method, device, and system are provided by which it is possible to obtain an image including a road region, to detect one or more road dividing object regions in the image, to detect plural feature points of one or more road dividing objects in the one or more road dividing object regions, and to determine the one or more road dividing objects on the grounds of the detected plural feature points of the one or more road dividing objects in the one or more road dividing object regions.

Therefore, by utilizing the road dividing object detection method, device, and system according to the embodiments of the present invention, it is possible to detect plural road dividing object regions in an image, the distribution of these regions being able to reflect the basis conditions of plural road dividing objects in the image. And then, on the basis of the detected plural feature points of the plural road dividing objects in the plural road dividing object regions, it is possible to determine the plural road dividing objects in the image. Since the related road dividing object modelling process is conducted on the basis of the road dividing object regions (i.e., a kind of middle-layer expression) but not pixels (i.e., a kind of pure bottom-layer expression), it is possible to reduce the complexity of both the related road dividing object modelling process and the related post-processing algorithm, and to improve the accuracy of the road dividing object detection process. As a result, the road dividing object detection method, device, and system according to the embodiments of the present invention are very suitable for a driving assistant system which needs an extremely high realness.

Up to here, the road dividing object detection method, device, and system according to the embodiments of the present invention have been set forth in detail by taking a road dividing line to serve as an example of the road dividing object. However, the present invention is not limited to this. That is, the object dividing object in the embodiments of the preset invention may also be a road shoulder made of stone, a fence, or any other object by which it is possible to mark the region of a road and the parts of the road to be used by a vehicle.

In addition, it should be noted that the above respective embodiments are just exemplary ones, and the specific structure and operation of them may not be used for limiting the present invention.

Moreover, the embodiments of the present invention may be implemented in any convenient form, for example, using dedicated hardware or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

**Claims**

1. A method of detecting at least one road dividing object, comprising:

   a first obtainment step (S210) of obtaining an image including a road region;
   a region detection step (S220) of detecting at least one road dividing object region in the road region of the image;
   a feature point detection step (S230) of detecting plural feature points of the at least one road dividing object in the at least one road dividing object region; and
   a determination step (S240) of determining, based on the plural feature points of the at least one road dividing object in the at least one road dividing object region, the at least one road dividing object,
   wherein the region detection step (S220) includes:

      a first sub step of generating noticeable sub regions in the image;
      a second sub step of obtaining an image feature of each of the noticeable sub regions, the image feature includes a grayscale feature, a gradient feature, or a disparity feature;
      a third sub step of selecting, based on the image features of the noticeable sub regions, plural sub regions including the at least one road dividing object from the noticeable sub regions and, by utilizing a predetermined sub region classifier, determining, based on the image feature of each of the noticeable sub regions, whether the corresponding noticeable sub region belongs to the plural sub regions including the at least one road dividing object; and
a fourth sub step of generating, based on the plural sub regions, the at least one road dividing object region.

2. The method according to claim 1, wherein, the feature point detection step (S230) includes:

a first sub step of detecting feature points of road dividing objects in the road region of the image; and
a second sub step of extracting the plural feature points of the at least one road dividing object in the at least one road dividing object region from the feature points of the road dividing objects in the road region of the image,
wherein, the first sub step includes
detecting feature points in the image; and
extracting, based on image features of the road dividing objects in the road region of the image, the feature points of the road dividing objects from the feature points in the image.

3. The method according to claim 1, wherein, the feature point detection step (S230) includes:

a sub step of detecting, only in the at least one road dividing object region, the plural feature points of the at least one road dividing object,
wherein, the sub step includes
detecting feature points of the image in the at least one road dividing object region; and
extracting, based on an image feature of the at least one road dividing object, the plural feature points of the at least one road dividing object from the feature points of the image in the at least one road dividing object region.

4. The method according to any one preceding claim, wherein, the fourth sub step includes:
carrying out a clustering process based on the image features of the plural sub regions, so as to let the image features of the sub regions clustered into each road dividing object region have a minimum within-class variance and a maximum between-class variance.

5. The method according to any one preceding claim, wherein, the determination step (S240) includes:
by utilizing the plural feature points of the at least one road dividing object, fitting a model of the at least one road dividing object so as to determine the at least one road dividing object in the road region of the image.

6. A device for detecting at least one road dividing object, comprising:

a first obtainment part (1010) configured to obtain an image including a road region;
a region detection part (1020) configured to detect at least one road dividing object region in the road region of the image;
a feature point detection part (1030) configured to detect plural feature points of the at least one road dividing object in the at least one road dividing object region; and
a determination part (1040) configured to determine, based on the plural feature points of the at least one road dividing object in the at least one road dividing object region, the at least one road dividing object,
wherein the region detection part (1020) includes:

a first generation part configured to generate noticeable sub regions of the image;
a second obtainment part configured to obtain an image feature of each of the noticeable sub regions;
a sub region selection part configured to select, based on the image feature of each of the noticeable sub regions, plural sub regions including the at least one road dividing object from the noticeable sub regions; and
a second generation part configured to generate, based on the plural sub regions, the at least one road dividing object region,

and further wherein:
the sub region selection part utilizes a predetermined sub region classifier to determine, based on the image feature of each of the noticeable sub regions, whether the corresponding noticeable sub region belongs to the plural sub regions including the at least one road dividing object region.

7. A non-transitory computer-readable medium having computer-executable instructions for execution by a processing system, wherein, the computer-executable instructions, when executed, cause the processing system to carry out a method according to any one of claim 1 to 5.

**Patentansprüche**

1. Verfahren zum Erkennen mindestens eines Straßenteilungsobjekts, Folgendes beinhaltend:

einen ersten Erstellungsschritt (S210) des Erstellens eines Bildes, welches einen Straßenbereich umfasst;

einen Bereichserkennungsschritt (S220) des Erkennens mindestens eines Straßenteilungsobjektbereichs in dem Straßenbereich des Bildes;

einen Merkmalspunkterkennungsschritt (S230) des Erkennens mehrerer Merkmalspunkte des mindestens einen Straßenteilungsobjekts in dem mindestens einen Straßenteilungsobjektbereich; und

einen Bestimmungsschritt (S240) des Bestimmens, basierend auf den mehreren Merkmalspunkten des mindestens einen Straßenteilungsobjekts in dem mindestens einen Straßenteilungsobjektbereich, des mindestens einen Straßenteilungsobjekts,

wobei der Bereichserkennungsschritt (S220) Folgendes beinhaltet:

einen ersten Unterschritt des Erzeugens erkennbarer Teilbereiche in dem Bild;

einen zweiten Unterschritt des Erstellens eines Bildmerkmals eines jeden der erkennbaren Teilbereiche, wobei das Bildmerkmal ein Graustufenmerkmal, ein Gradientenmerkmal oder ein Disparitätsmerkmal umfasst;

einen dritten Unterschritt des Auswählens, basierend auf den Bildmerkmalen der erkennbaren Teilbereiche, mehrerer Teilbereiche, welche das mindestens eine Straßenteilungsobjekt aus den erkennbaren Teilbereichen umfasst, unter Verwendung eines vorbestimmten Teilbereichs-Klassifizierers, des Bestimmens, basierend auf dem Bildmerkmal eines jeden der erkennbaren Teilbereiche, ob der entsprechende erkennbare Teilbereich zu den mehreren Teilbereichen gehört, welche das mindestens eine Straßenteilungsobjekt umfassen; und

einen vierten Schritt des Erzeugens, basierend auf den mehreren Teilbereichen, des mindestens einen Straßenteilungsobjektbereichs.

2. Verfahren nach Anspruch 1, bei welchem der Merkmalspunkterkennungsschritt (S230) Folgendes umfasst:

einen ersten Unterschritt des Erkennens von Merkmalspunkten von Straßenteilungsobjekten in dem Straßenbereich des Bildes; und

einen zweiten Unterschritt des Extrahierens der mehreren Merkmalspunkte des mindestens einen Straßenteilungsobjekts in dem mindestens einen Straßenteilungsobjektbereich aus den Merkmalspunkten der Straßenteilungsobjekte in dem Straßenbereich des Bildes,

wobei der erste Unterschritt Folgendes umfasst:

Erkennen von Merkmalspunkten in dem Bild; und

Extrahieren, basierend auf Bildmerkmalen der Straßenteilungsobjekte in dem Straßenbereich des Bildes, der Merkmalspunkte der Straßenteilungsobjekte aus den Merkmalspunkten in dem Bild.

3. Verfahren nach Anspruch 1, bei welchem der Merkmalspunkterkennungsschritt (S230) Folgendes umfasst:

einen Unterschritt des Erkennens, nur in dem mindestens einen Straßenteilungsobjektbereich, der mehreren Merkmalspunkte des mindestens einen Straßenteilungsobjekts,

wobei der Unterschritt Folgendes umfasst:

Erkennen von Merkmalspunkten des Bildes in dem mindestens einen Straßenteilungsobjektbereich; und

Extrahieren, basierend auf einem Bildmerkmal des mindestens einen Straßenteilungsobjekts, der mehreren Merkmalspunkte des mindestens einen Straßenteilungsobjekts aus den Merkmalspunkten des Bildes in dem mindestens einen Straßenteilungsobjektbereich.

4. Verfahren nach einem der vorhergehenden Ansprüche, bei welchem der vierte Schritt Folgendes beinhaltet:

Ausführen eines Clusterbildungsprozesses, basierend auf den Bilmerkmalen der mehreren Teilbereiche, damit die Bildmerkmale der Teilbereiche, die in jedem Straßenteilungsobjektbereich gruppiert sind, eine minimale Varianz innerhalb einer Klasse und eine maximale Varianz zwischen Klassen aufweisen.

5. Verfahren nach einem der vorhergehenden Ansprüche, bei welchem der Bestimmungsschritt (S240) Folgendes beinhaltet:

unter Verwendung der mehreren Merkmalspunkte des mindestens einen Straßenteilungsobjekts, Anpassen eines Modells des mindestens einen Straßenteilungsobjekts, um so das mindestens eine Straßenteilungsobjekt in dem Straßenbereich des Bildes zu bestimmen,

6. Vorrichtung zum Erkennen mindestens eines Straßenteilungsobjekts, Folgendes beinhaltend:

einen ersten Erstellungsabschnitt (1010), welcher zum Erstellen eines Bildes, welches einen Straßenbereich umfasst, konfiguriert ist;
einen Bereichserkennungsabschnitt (1020), welcher zum Erkennen mindestens eines Straßenteilungsobjektbereichs in dem Straßenbereich des Bildes konfiguriert ist;
einen Merkmalspunkterkennungsabschnitt (1030), welcher zum Erkennen mehrerer Merkmalspunkte des mindestens einen Straßenteilungsobjekts in dem mindestens einen Straßenteilungsobjektbereich konfiguriert ist; und
einen Bestimmungsabschnitt (1040), welcher zum Bestimmen, basierend auf den mehreren Merkmalspunkten des mindestens einen Straßenteilungsobjekts in dem mindestens einen Straßenteilungsobjektbereich, des mindestens einen Straßenteilungsobjekts konfiguriert ist, wobei der Bereichserkennungsabschnitt (1020) Folgendes beinhaltet:

einen ersten Erzeugungsabschnitt, welcher zum Erzeugen erkennbarer Teilbereiche des Bildes konfiguriert ist;
einen zweiten Erstellungsabschnitt, welcher konfiguriert ist, um ein Bildmerkmal eines jeden der erkennbaren Teilbereiche einzuholen;
einen Teilbereichsauswahlabschnitt, welcher konfiguriert ist, um, basierend auf dem Bildmerkmal eines jeden der erkennbaren Teilbereiche, mehrere Teilbereiche auszuwählen, welche das mindestens eine Straßenteilungsobjekt umfassen, aus den erkennbaren Teilbereichen auszuwählen; und
einen zweiten Erzeugungsabschnitt, welcher konfiguriert ist, um, basierend auf den mehreren Teilbereichen, den mindestens einen Straßenteilungsobjektbereich zu erzeugen,

und wobei zudem:
der Teilbereichsauswahlabschnitt einen vorbestimmten Teilbereichs-Klassifizierer verwendet, um basierend auf dem Bildmerkmal eines jeden der erkennbaren Teilbereiche, zu bestimmen, ob der entsprechende erkennbare Teilbereich zu den mehreren Teilbereichen gehört, welche den mindestens eine Straßenteilungsobjektbereich umfassen.

7. Nicht transientes, computerlesbares Speichermedium, welches computerausführbare Anweisungen zur Ausführung durch ein Verarbeitungssystem aufweist, wobei die computerausführbaren Anweisungen, wenn sie ausgeführt werden, das Verarbeitungssystem veranlassen, ein Verfahren nach einem der Ansprüche 1 bis 5 auszuführen.

## Revendications

1. Procédé de détection d'au moins un objet de division de route, comprenant :

une première étape d'obtention (S210) consistant à obtenir une image incluant une région de route,
une étape de détection de région (S220) consistant à détecter au moins une région d'objet de division de route dans la région de route de l'image,
une étape de détection d'élément caractéristique (S230) consistant à détecter plusieurs éléments caractéristiques du au moins un objet de division de route dans la au moins une région d'objet de division de route, et
une étape de détermination (S240) consistant à déterminer, sur la base des plusieurs éléments caractéristiques du au moins un objet de division de route dans la au moins une région d'objet de division de route, le au moins un objet de division de route,
dans lequel l'étape de détection de région (S220) inclut :

une première sous-étape consistant à générer des sous-régions remarquables dans l'image,
une seconde sous-étape consistant à obtenir une propriété d'image de chacune des sous-régions remarquables, la propriété d'image incluant une propriété de niveau de gris, une propriété de gradient ou une propriété de disparité,
une troisième sous-étape consistant à sélectionner, sur la base des propriétés d'image des sous-régions remarquables, plusieurs sous-régions incluant le moins un objet de division de route parmi les sous-régions remarquables et, en utilisant un classifieur de sous-région prédéterminé, déterminer, sur la base de la propriété d'image de chacune des sous-régions remarquables, si la sous-région remarquable correspondantes fait partie des plusieurs sous-régions incluant le au moins un objet de division de route, et
une quatrième sous-étape consistant à générer, sur la base des plusieurs sous-régions, la au moins une région d'objet de division de route.

2. Procédé selon la revendication 1, dans lequel l'étape de détection d'élément caractéristique (S230) inclut :

une première sous-étape consistant à détecter des éléments caractéristiques des objets de division de route dans la région de route de l'image, et

une seconde sous-étape consistant à extraire les plusieurs éléments caractéristiques du au moins un objet de division de route dans la au moins une région d'objet de division de route parmi les éléments caractéristiques des objets de division de route dans la région de route de l'image,

dans lequel la première sous-étape inclut la détection des éléments caractéristiques dans l'image, et

l'extraction, sur la base des propriétés d'image des objets de division de route dans la région de route de l'image, des éléments caractéristiques des objets de division de route parmi les éléments caractéristiques dans l'image.

3. Procédé selon la revendication 1, dans lequel l'étape de détection d'élément caractéristique (S230) inclut :

une sous-étape consistant à détecter, uniquement dans la au moins une région d'objet de division de route, les plusieurs éléments caractéristiques du au moins un objet de division de route,

dans lequel la sous-étape inclut

la détection d'éléments caractéristiques de l'image dans la au moins une région d'objet de division de route, et

l'extraction, sur la base d'une propriété d'image du au moins un objet de division de route, des plusieurs éléments caractéristiques du au moins un objet de division de route parmi les éléments caractéristiques de l'image dans la au moins une région d'objet de division de route.

4. Procédé selon l'une quelconque des revendications précédentes, dans lequel la quatrième sous-étape inclut :

l'exécution d'un processus de groupement sur la base des propriétés d'image des plusieurs sous-régions, de manière à ce que les propriétés d'image des sous-régions groupées dans chaque région d'objet de division de route présentent une variance minimale à l'intérieur d'une classe et une variance maximale entre les classes.

5. Procédé selon l'une quelconque des revendications précédentes, dans lequel l'étape de détermination (S240) inclut l'opération consistant à :

en utilisant les plusieurs éléments caractéristiques du au moins un objet de division de route, assembler un modèle du au moins un objet de division de route de façon à déterminer le au moins un objet de division de route dans la région de route de l'image.

6. Dispositif de détection d'au moins un objet de division de route, comprenant :

une première partie d'obtention (101) configurée pour obtenir une image incluant une région de route,

une partie de détection de région (1020) configurée pour détecter au moins une région d'objet de division de route dans la région de route de l'image,

une partie de détection d'élément caractéristique (1030) configurée pour détecter plusieurs éléments caractéristiques du au moins un objet de division de route dans la au moins une région d'objet de division de route, et

une partie de détermination (1040) configurée pour déterminer sur la base des plusieurs éléments caractéristiques du au moins un objet de division de route dans la au moins une région d'objet de division de route, le au moins un objet de division de route,

dans lequel la partie de détection de région (1020) inclut :

une première partie de génération configurée pour générer des sous-régions remarquables de l'image,

une seconde partie d'obtention configurée pour obtenir une propriété d'image de chacune des sous-régions remarquables,

une partie de sélection de sous-région configurée pour sélectionner, sur la base de la propriété d'image de chacune des sous-régions remarquables, plusieurs sous-régions incluant le moins un objet de division de route parmi les sous-régions remarquables, et

une seconde partie de génération configurée pour générer, sur la base des plusieurs sous-régions, la au moins une région d'objet de division de route,

et dans lequel en outre

la partie de sélection de sous-région utilise un classifieur de sous-région prédéterminé pour déterminer, sur la base de la propriété d'image de chacune des sous-régions remarquables, si la sous-région remarquable correspondante fait partie des plusieurs sous-régions incluant la au moins une région d'objet de division de route.

7. Support lisible par ordinateur non-transitoire comportant des instructions exécutables par un ordinateur à exécuter par un système de traitement, dans lequel les instructions exécutables par un ordinateur, lorsqu'elles sont exécutées, engendrent l'exécution par le système de traitement d'un procédé selon l'une quelconque des revendications 1 à 5.

# FIG.1

DRIVER ASSISTANCE SYSTEM

PARTS RELATED TO ROAD

LDW/RDW

ROAD
DETECTION
PART

# FIG.2

START

OBTAIN IMAGE INCLUDING ROAD REGION — S210

DETECT ROAD DIVIDING OBJECT REGION — S220

DETECT FEATURE POINTS OF ROAD DIVIDING OBJECT IN ROAD DIVIDING OBJECT REGION — S230

DETERMINE ROAD DIVIDING OBJECT BASED ON FEATURE POINTS DETECTED IN ROAD DIVIDING OBJECT REGION — S240

END

# FIG.3

```
        ┌─────────────┐
        │    START    │
        └─────────────┘
               │
               ▼
   ┌───────────────────────────┐
   │   GENERATE ALL NOTICEABLE │────  S310
   │     SUB REGIONS IN IMAGE  │
   └───────────────────────────┘
               │
               ▼
   ┌───────────────────────────┐
   │  OBTAIN IMAGE FEATURE OF  │────  S320
   │     EACH NOTICEABLE       │
   │        SUB REGION         │
   └───────────────────────────┘
               │
               ▼
   ┌───────────────────────────┐
   │   SELECT ROAD DIVIDING    │
   │   OBJECT SUB REGIONS FROM │
   │   ALL NOTICEABLE SUB      │────  S330
   │   REGIONS BASED ON IMAGE  │
   │   FEATURE OF EACH         │
   │   NOTICEABLE SUB REGION   │
   └───────────────────────────┘
               │
               ▼
   ┌───────────────────────────┐
   │  GENERATE ROAD DIVIDING   │
   │  OBJECT REGION BASED ON   │────  S340
   │  ROAD DIVIDING OBJECT     │
   │       SUB REGIONS         │
   └───────────────────────────┘
               │
               ▼
        ┌─────────────┐
        │     END     │
        └─────────────┘
```

# FIG.4

# FIG.5

# FIG.6

# FIG.7

## FIG.8

## FIG.9

# FIG.10

1000

| ~1010 | ~1020 | ~1030 | ~1040 |
|---|---|---|---|
| FIRST OBTAINMENT PART | REGION DETECTION PART | FEATURE POINT DETECTION PART | DETERMINATION PART |

# FIG.11

1100

| ~1110 | ~1120 | ~1130 |
|---|---|---|
| INPUT DEVICE | PROCESSING DEVICE | OUTPUT DEVICE |

~1140

STORAGE DEVICE

EP 3 079 099 B1

**EP 3 079 099 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014003709 A